# EUROPÄISCHE PATENTSCHRIFT

(11) **EP 2 262 648 B1**
(45) Veröffentlichungstag und Bekanntmachung des Hinweises auf die Patenterteilung: **31.08.2011**
(21) Anmeldenummer: 09716332.3
(22) Anmeldetag: 28.02.2009
(51) Int. Cl.: B42D 15/00

(54) **VERFAHREN ZUR HERSTELLUNG EINES FOLIENELEMENTS**
METHOD FOR PRODUCING A FILM ELEMENT
PROCÉDÉ DE FABRICATION D'UN ÉLÉMENT EN FEUILLE

(30) Priorität: 06.03.2008 DE 102008013073
(43) Veröffentlichungstag der Anmeldung: 22.12.2010
(73) Patentinhaber: Leonhard Kurz Stiftung & Co. KG, 90763 Fürth (DE)
(72) Erfinder: BREHM, Ludwig, 91325 Adelsdorf (DE); KATSCHOREK, Haymo, 90578 Obermichelbach (DE); LAUS, Norbert, 90768 Fürth-Burgfarmbach (DE)
(74) Vertreter: Zinsinger, Norbert
(86) Internationale Anmeldenummer: PCT/EP2009/001452
(87) Internationale Veröffentlichungsnummer: WO 2009/109343

(56) Entgegenhaltungen:
- EP-A- 1 747 905
- EP-A- 2 028 017
- WO-A-2004/020218
- WO-A-2006/084686

## Beschreibung

Die Erfindung betrifft ein Verfahren zur Herstellung eines Folienelements mit zueinander registrierten metallischen Schichten sowie ein solches Folienelement.

Folienelemente mit metallischen Reflexionsschichten werden häufig dazu verwendet, um als optisch variables Sicherungselement (OVD) das Kopieren und den Missbrauch von Dokumenten wie Banknoten, Kreditkarten oder Geldkarten oder Produkten zu erschweren und wenn möglich zu verhindern. Um die Fälschungssicherheit solcher Folienelemente weiter zu erhöhen, wurde die Verwendung von optisch variablen Sicherungselementen vorgeschlagen, deren metallische Reflexionsschicht nicht vollflächig in dem Folienelement vorgesehen ist, sondern strukturiert ist und lediglich partiell in dem Folienelement vorgesehen ist. Unter zueinander registrierten metallischen Schichten werden hierbei Schichten verstanden, die zueinander passergenau angeordnet sind, d.h. die in einer festen Beziehung zueinander strukturiert sind.

So beschreibt beispielsweise WO 03/095227 A1 ein optisch variables Sicherheitselement, dessen metallische Reflexionsschicht lediglich partiell vorgesehen ist und so ein transparentes Fenster in dem Sicherheitselement ausgebildet wird. Zur Strukturierung der metallischen Reflexionsschicht wird hierbei vorgeschlagen, die metallische Reflexionsschicht vollflächig aufzudampfen und sodann mittels Positiv- oder Negativ-Ätzung oder Ablation in den Bereichen wieder zu entfernen, in denen das transparente Fenster vorgesehen wird. WO2004/020218 zeigt ebenfalls ein optisch variables Sicherheitselement mit metallischen Schichten.

Es hat sich nun gezeigt, dass sich weitere interessante optisch variable Effekte dadurch erzielen lassen, dass innerhalb eines Folienelements nicht nur eine metallische Reflexionsschicht, sondern zwei partiell ausgeformte, dem menschlichen Betrachter opak erscheinende metallische Reflexionsschichten vorgesehen werden. Hierbei kommt der passergenauen Ausrichtung der beiden metallischen Schichten besondere Bedeutung zu, da diese die sich ergebenden optischen Eigenschaften gegebenenfalls stark beeinflussen können. Die optisch leicht erkennbare, passergenaue Ausrichtung der beiden metallischen Schichten zueinander kann auch selbst direkt als Sicherheitsfeature genutzt werden, weil eine Nachstellung dieser exakten passergenauen Ausrichtung schwierig und sehr aufwendig ist. Mit den bisher bekannten Verfahren lässt sich ein Folienelement mit möglichst passergenau zueinander ausgerichteten, insbesondere unterschiedlich strukturierten metallischen Schichten jedoch nur schlecht realisieren: Wird so beispielsweise zur Herstellung eines solchen Folienelements in einem ersten Fertigungsschritt eine erste metallische Schicht mittels eines Photoresists strukturiert und, nach einigen Zwischenschritten (Aufbringen von weiteren Schichten), in einem weiteren Fertigungsschritt eine zweite metallische Schicht mittels eines Photoresists strukturiert, so ist eine Registrierung des zweiten Belichtungsprozesses auf die strukturierte erste metallische Schicht nur schwer möglich und mit größeren Registerungenauigkeiten verbunden. Im Weiteren hat sich gezeigt, dass durch die zwischen den Belichtungsprozessen liegenden Bearbeitungsschritte der Folienkörper zwar nur leicht, aber unvorhersehbar verzerrt wird, so dass auch aus diesem Grunde eine perfekte, registergenaue Strukturierung der zweiten metallischen Schicht zur ersten metallischen Schicht bei dieser Vorgehensweise misslingt.

Der Erfindung liegt nun die Aufgabe zugrunde, die Herstellung von Folienelementen mit zueinander registrierten metallischen Schichten zu verbessern und ein entsprechend verbessertes Folienelement anzugeben.

Diese Aufgabe wird von einem Verfahren zur Herstellung eines Folienelements mit zueinander registrierten metallischen Schichten gelöst, bei dem eine auf einer ersten Oberfläche einer flexiblen, ein- oder mehrschichtigen Trägerfolie vorgesehene erste metallische Schicht und eine auf der der ersten Oberfläche gegenüberliegenden zweiten Oberfläche der Trägerfolie vorgesehene Maskierungsschicht mittels zueinander synchronisierter, strukturgebender Prozesse, vorzugsweise optischer strukturgebender Prozesse, zueinander passergenau strukturiert werden, bei dem nach der Strukturierung der ersten metallischen Schicht und der Maskierungsschicht ein oder mehrere weitere Schichten auf die erste metallische Schicht aufgebracht werden, bei dem auf die ein oder mehreren weiteren Schichten eine zweite metallische Schicht aufgebracht wird und auf die zweite metallische Schicht eine erste photoaktivierbare Schicht aufgebracht wird, und bei dem die erste photoaktivierbare Schicht mittels Durchbelichtung durch die Maskierungsschicht, die erste metallische Schicht, die ein oder mehreren weiteren Schichten und die zweite metallische Schicht von Seiten der Maskierungsschicht mittels elektromagnetischer Strahlung einer Wellenlänge strukturiert wird, für die die erste photoaktivierbare Schicht empfindlich ist, wobei die Dicke und das Material der Maskierungsschicht und der ersten metallischen Schicht so gewählt sind, dass das Verhältnis der Transmissionsgrade der Maskierungsschicht und der ersten metallischen Schicht bei der Wellenlänge der für die Durchbelichtung verwendeten elektromagnetischen Strahlung größer oder gleich 1:10 ist, vorzugsweise etwa 1:10 ist. Die erste und zweite metallische Schicht sind so zueinander registriert und damit passergenau zueinander angeordnet. Erfindungsgemäß wird so die erste photoaktivierbare Schicht, welche der Strukturierung der zweiten metallischen Schicht dient, nicht wie üblich von der der metallischen Schicht abgewandten Seite der photoaktivierbaren Schicht belichtet, sondern durch diese metallische Schicht hindurch belichtet. Der Folienkörper, welcher die Maskierungsschicht, die Trägerfolie, die erste metallische Schicht, die ein oder mehreren weiteren Schichten und die zweite metallische Schicht umfasst, wird damit von Seiten der Maskierungsschicht her belichtet, d.h. die Belichtungseinrichtung ist auf der Seite dieses Folienkörpers angeordnet, deren oberste Schicht die Maskierungsschicht ist. Die Maskierungsschicht ist demnach in Bezug auf die Belichtungseinrichtung die der

Belichtungseinrichtung nächstkommende Schicht des Folienkörpers, so dass die Belichtung durch die Maskierungsschicht erfolgt. Es hat sich überraschender Weise gezeigt, dass es bei Einhaltung der oben genannten Bedingungen möglich ist, die erste photoaktivierbare Schicht mittels auf der zweiten Oberfläche der Trägerfolie vorgesehenen Maskierungsschicht zu strukturieren, obwohl zwischen dieser Maskierungsschicht und der photoaktivierbaren Schicht die vollflächige vorgesehene zweite metallische Schicht (die für den menschlichen Betrachter opak erscheint) und die (andersartig) strukturierte erste metallische Schicht liegt.

Durch die Erfindung wird eine passergenaue Strukturierung der ersten und zweiten metallischen Schicht ermöglicht und die oben beschriebenen Probleme vermieden.

Gemäß einem bevorzugten Ausführungsbeispiel der Erfindung wird im Weiteren das Verhältnis des Transmissionsgrades der Maskierungsschicht zu dem Transmissionsgrad der ersten metallischen Schicht bei der Wellenlänge der für die Durchbelichtung verwendeten elektromagnetischen Strahlung größer gleich 1:15, bevorzugt zwischen 1:15 und 1:20, gewählt. Unter Transmissionsgrad ist hierbei der Grad der Durchlässigkeit der Schicht für die elektromagnetische Strahlung (in Prozent) zu verstehen, d.h. dass die erste metallische Schicht mindestens 15 mal so durchlässig für die elektromagnetische Strahlung ist wie die Maskierungsschicht. Hierdurch wird eine besonders sichere Strukturierung der ersten photoaktivierbaren Schicht erzielt. Untersuchungen haben überraschend ergeben, dass für ein erfolgreiches Belichten der ersten photoaktivierbaren Schicht im Wesentlichen nur der Transmissionsgrad der ersten metallischen Schicht und der Transmissionsgrad der Maskierungsschicht ausschlaggebend ist, eine ausreichende Beleuchtungsstärke und Belichtungsdauer vorausgesetzt. Der Transmissionsgrad des Schichtgebildes bestehend aus der (strukturierten) Maskierungsschicht, Trägerfolie und der (strukturierten) ersten metallischen Schicht, wird an der opaksten (lichtundurchlässigsten) Stelle (Maskierungsschicht, Trägerfolie, erste metallische Schicht) und an der transmissivsten (lichtdurchlässigsten) Stelle

(Maskierungsschicht und erste metallische Schicht nicht vorhanden) durch den Transmissionsgrad der Trägerfolie bestimmt. Im Weiteren muss sichergestellt werden, dass auch an den Stellen, an denen die Maskierungsschicht nicht vorgesehen ist, aber die erste metallische Schicht vorgesehen ist, die erste photoaktivierbare Schicht bei der Durchbelichtung aktiviert wird und an den Stellen, an denen die Maskierungsschicht vorgesehen ist aber die erste metallische Schicht nicht vorgesehen ist, die erste photoaktivierbare Schicht nicht aktiviert wird. Wird nun das Verhältnis der Transmissionsgrade der Maskierungsschicht und der ersten metallischen Schicht wie oben dargelegt gewählt, so ist bei ausreichender Belichtungsstärke und Dauer eine passergenau zur Maskierungsschicht ausgerichtete Strukturierung der ersten photoaktivierbaren Schicht bei beliebiger Ausformung und Strukturierung der ersten metallischen Schicht möglich.

Weiter hat sich bewährt, den Transmissionsgrad der Maskierungsschicht bei der Wellenlänge der für die Durchbelichtung verwendeten elektromagnetischen Strahlung kleiner als 6% zu wählen.

Die erste und die zweite metallische Schicht können aus beliebigen Metallen oder Metalllegierungen bestehen, wobei die Schichtdicke der ersten metallischen Schicht so gewählt wird, dass die oben angegebenen Bedingungen bezüglich der Transmissionsgrade der Schichten erfüllt werden. Vorzugsweise besteht die erste metallische Schicht hierbei aus Silber, vorzugsweise mit einer Schichtdicke von 20 bis 40 nm. Die zweite metallische Schicht besteht vorzugsweise aus Aluminium, Kupfer oder Silber, vorzugsweise in einer Schichtdicke von 10 bis 50 nm. Hierbei ist es weiter auch möglich, dass die zweite metallische Schicht aus zwei oder mehreren übereinander angeordneten Teilschichten aus unterschiedlichen Metallen besteht. Dies kann dazu verwendet werden, den Transmissionsgrad der zweiten metallischen Schicht so einzustellen, dass die bei der Durchbelichtung zu verwendende Beleuchtungsstärke und/oder Belichtungsdauer auf die vorhandenen Produktionsmaschinen abgestimmt ist.

Gemäß eines bevorzugten Ausführungsbeispiels der Erfindung besteht die Maskierungsschicht aus einem Metall oder einer Metalllegierung, insbesondere aus Kupfer. Metallschichten zeichnen sich durch eine besonders hohe Opazität bei geringer Schichtdicke aus, so dass die Schichtdicke der Maskierungsschicht und weiter auch die gesamte Schichtdicke des Folienelements reduziert werden kann. Weiter ist es aber auch möglich, dass die Maskierungsschicht aus zwei oder mehr Schichten besteht, welche vorzugsweise eine Metallschicht umfassen. So ist es beispielsweise möglich, dass eine zur Strukturierung der Maskierungsschicht verwendete, schwarz eingefärbte Photoresist-Schicht als Teil der Maskierungsschicht in dem Folienkörper verbleibt.

Die Aufgabe wird weiter erfingdungsgemäß durch ein Verfahren zur Herstellung eines Folienelements mit zueinander registrierten metallischen Schichten gelöst, bei dem eine auf einer ersten Oberfläche einer flexiblen, ein- oder mehrschichtigen Trägerfolie vorgesehene erste metallische Schicht und eine auf einer der ersten Oberfläche gegenüber liegenden zweiten Oberfläche der Trägerfolie vorgesehene Maskierungsschicht mittels zueinander synchronisierter strukturgebender Prozesse zueinander passergenau strukturiert werden, bei dem nach der Strukturierung der ersten metallischen Schicht und der Maskierungsschicht ein oder mehrere weitere Schichten auf die erste metallische Schicht aufgebracht werden, bei dem auf die ein oder mehreren weiteren Schichten eine zweite metallische Schicht aufgebracht wird, bei dem auf die zweite metallische Schicht eine erste photoaktivierbare Schicht aufgebracht wird und bei dem die erste photoaktivierbare Schicht gesteuert durch die Maskierungsschicht mit elektromagnetischer Strahlung, für die die erste photoaktivierbare Schicht empfindlich ist, von der der Maskierungsschicht gegenüberliegenden Seite des Folienkörpers her belichtet wird, der die Maskierungsschicht, die erste metallische Schicht, die ein oder mehreren weiteren Schichten, die zweite metallische Schicht und die erste photoaktivierbare Schicht umfasst, und so strukturiert wird. Die erste und zweite metallische Schicht sind so zueinander registriert und damit passergenau zueinander angeordnet. Die Belichtung des die Maskierungsschicht, die Trägerfolie, die erste metallische Schicht, die ein oder mehreren weiteren Schichten, die zweite metallische Schicht und die erste photoaktivierbare Schicht umfassenden Folienkörpers erfolgt demnach nicht von Seiten der Maskierungsschicht her sondern von der dieser Seite gegenüber liegenden Seite des Folienkörpers her, so dass die Belichtungseinrichtung nun auf der der Maskierungsschicht gegenüber liegenden Seite des Folienkörpers angeordnet ist. Damit bildet nun die erste photoaktivierbare Schicht die der Belichtungseinrichtung nächstliegende Schicht des Folienkörpers. Auch bei dieser Vorgehensweise wird eine passergenaue Strukturierung der ersten und der zweiten metallischen Schicht ermöglicht.

Gemäß eines bevorzugten Ausführungsbeispiels der Erfindung wird hier die Maskierungsschicht mittels ein oder mehreren optischen Sensoren optisch abgetastet und die Belichtung der ersten photoaktivierbaren Schicht entsprechend der von den optischen Sensoren erfassten Werte gesteuert. So ist es beispielsweise möglich, dass ein Sensor-Array die Maskierungsschicht optisch abtastet und einen Laser ansteuert, der an der gegenüber liegenden Seite des Folienkörpers angeordnet ist und gesteuert von den von dem Sensor-Array erfassten Werten simultan zur Abtastung die erste photoaktivierbare Schicht belichtet.

Weiter hat es sich auch bewährt, die Maskierungsschicht mittels einer Lichtquelle zu belichten und das von der Maskierungsschicht reflektierte Licht zur Belichtung de ersten photoaktivierbaren Schicht umzulenken und so die erste photoaktivierbare Schicht gesteuert durch die Maskierungsschicht zu belichten. Das auf die Maskierungsschicht eingestrahlte und von dieser reflektierte Licht wird so beispielsweise mittels einer Spiegelanordnung um den Folienkörper herum gelenkt und zur Belichtung des Folienkörpers von der der Maskierungsschicht gegenüber liegenden Seite des Folienkörpers eingesetzt. Eine solche Anordnung zeichnet sich durch einen kostengünstigen Aufbau und eine hohe erzielbare Produktionsgeschwindigkeit aus.

Vorzugsweise wird bei den erfindungsgemäßen Verfahren wie folgt verfahren:
Vorzugsweise wird die zweite metallische Schicht in den Bereichen, in denen die erste photoaktivierbare Schicht bei der Belichtung aktiviert worden ist oder
in den Bereichen, in denen die photoaktivierbare Schicht bei der Belichtung nicht aktiviert worden ist, mittels eines Ätzprozesses partiell entfernt, so dass die zweite metallische Schicht entsprechen der Maskierungsschicht passergenau zur ersten metallischen Schicht strukturiert ist. Es ist so möglich,
als photoaktivierbare Schicht einen Photoresist zu verwendet, welcher sich in dem belichteten Bereich zersetzt oder auflöst, so dass die zweite metallische Schicht lediglich in den belichteten Bereichen durch den Ätzprozess entfernt wird (Positiv-Resist). Weiter ist es auch möglich, als photoaktivierbare Schicht einen Photoresist zu verwenden, der durch Bestrahlung eine Schutzwirkung gegenüber der bei dem Ätzprozess verwendeten Lauge oder Säure aufbaut (durch Polymerisierung bzw. Aushärtung), so dass die zweite metallische Schicht lediglich in den nicht belichteten Bereichen durch den Ätzprozess entfernt wird (Negativ-Resist).

Gemäß einem bevorzugten Ausführungsbeispiel werden bei den erfindungsgemäßen Verfahren als synchronisierte strukturgebende Prozesse zwei zueinander synchronisierte Belichtungsprozesse verwendet. Hierzu wird vorzugsweise die Maskierungsschicht und die erste metallische Schicht auf den ein- oder mehrschichtigen Folienkörper aufgebracht, anschließend eine zweite photoaktivierbare Schicht auf die erste metallische Schicht und eine dritte photoaktivierbare Schicht auf die Maskierungsschicht aufgebracht und sodann die zweite photoaktivierbare Schicht in einem ersten Belichtungsprozess durch eine erste Belichtungsmaske und die dritte photoaktivierbare Schicht in einem zweiten Belichtungsprozess durch eine zweite Belichtungsmaske belichtet, wobei die erste und die zweite Belichtungsmaske passergenau zueinander ausgerichtet sind und so der erste und der zweite Belichtungsprozess zueinander synchronisiert sind.

Im weiteren werden die erste metallische Schicht und die Maskierungsschicht mittels eines Ätzprozesses in den Bereichen entfernt, in denen die zweite photoaktivierbare Schicht bzw. dritte photoaktivierbare Schicht durch den ersten bzw. zweiten Belichtungsprozess aktiviert oder nicht aktiviert worden ist. Hierbei ist die Verwendung eines Positiv- oder Negativ-Resist möglich, wie oben erläutert.

Es hat sich gezeigt, dass durch eine solche Vorgehensweise eine sehr hohe Passergenauigkeit zwischen der Strukturierung der ersten metallischen Schicht und der Strukturierung der Maskierungsschicht erzielt werden kann, die beispielsweise durch synchronisierte Druckverfahren nicht erzielbar ist. Im Weiteren lassen sich durch ein solches Verfahren hohe Produktionsgeschwindigkeiten erzielen, so dass die Fertigung besonders kostengünstig durchgeführt werden kann. Im weiteren hat sich bei dieser Vorgehensweise gezeigt, dass aufgrund der Abschirmwirkung der ersten Metallschicht und der Maskierungsschicht, die vor der Belichtung ja noch vollflächig vorliegen, eine gegenseitige Beeinflussung der beiden Belichtungsprozesse sicher verhindert wird und es so auch möglich ist, den Folienkörper simultan von beiden Seiten zu belichten, wodurch sich die Passergenauigkeit noch weiter erhöhen lässt. So hat es sich bewährt, die erste und zweite Belichtungsmaske an einander gegenüber liegenden Seiten des die zweite und dritte photoaktivierbare Schicht, die metallische Schicht, die Maskierungsschicht und die Trägerfolie umfassenden Folienkörpers anzuordnen und die zweite und dritte photoaktivierbare Schicht gleichzeitig zu belichten.

Bevorzugt werden die erste und die zweite Belichtungsmaske plattenförmig ausgeformt und werden mit kollimiertem Licht bestrahlt. Die beiden Belichtungsmasken sind hierbei vorzugsweise durch einen Halterahmen miteinander verbunden, welcher sicherstellt, dass die beiden Belichtungsmasken bei der Belichtung im Register zueinander fixiert sind. So werden beispielsweise bei der Belichtung die beiden Belichtungsmasken gegen den zwischen den Belichtungsmasken liegenden Folienkörper gepresst, hierbei durch den Halterahmen in fester Ausrichtung zueinander fixiert und dann der Folienkörper von beiden Seiten, jeweils durch die jeweilige Belichtungsmaske, belichtet. Hierdurch lässt sich eine besonders exakte Ausrichtung der Belichtungsmasken zueinander und damit eine besonders hohe Passergenauigkeit der Strukturierung der ersten metallischen Schicht und der Maskierungsschicht erreichen.

Weiter ist es aber auch möglich, zur Belichtung anstelle einer plattenförmigen Belichtungsmaske einen Trommelbelichter einzusetzen und so beispielsweise den Folienkörper mittels zweier miteinander (mechanisch) synchronisierter Trommelbelichter zu belichten.

Als erste und zweite Belichtungsmaske werden vorzugsweise Glasmasken eingesetzt. Für die Belichtung bei dem ersten und/oder zweiten Belichtungsprozess wird weiter bevorzugt eine elektromagnetische Strahlung einer Wellenlänge von weniger als 310 µm gewählt, da bei dieser Wellenlänge die für die Trägerfolie verwendete Kunststoff (vorzugsweise PET) ebenfalls nur eine geringe Durchgängigkeit aufweist und die Trägerfolie so ebenfalls zur Entkopplung des ersten und zweiten Belichtungsprozesses beiträgt.

Weiter hat es sich aber auch bewährt, dass bei dem erfindungsgemäßen Verfahren als synchronisierter strukturgebender Prozesse in Belichtungsprozess und ein Laser-Ablationsprozess verwendet werden, die miteinander synchronisiert sind. So wird beispielsweise die Maskierungsschicht in einem Laser-Ablationsprozess mittels eines Lasers strukturiert und die erste metallische Schicht in einem Belichtungsprozess mittels Belichtung durch eine Belichtungsmaske strukturiert, wobei der Laser mit der Position der Belichtungsmaske synchronisiert ist. Hierdurch kann auf einen Ätzprozess verzichtet werden wodurch sich Kosteneinsparungen ergeben.

Die der Erfindung zugrunde liegende Aufgabe wird weiter von einem mittels der oben beschriebenen Verfahren herstellbaren Folienelement gelöst, mit einer flexiblen, ein- oder mehrschichtigen Trägerfolie, einer ersten metallischen Schicht, die auf einer ersten Oberfläche der Trägerfolie vorgesehen ist, einer auf einer der ersten Oberfläche gegenüberliegenden zweiten Oberfläche der Trägerfolie vorgesehenen Maskierungsschicht, einer auf Seiten der ersten Oberfläche angeordneten zweiten metallischen Schicht und ein oder mehreren weiteren Schichten, die zwischen der ersten und der zweiten metallischen Schicht angeordnet sind, bei dem die Maskierungsschicht und die erste metallische Schicht passergenau zueinander strukturiert sind und die zweite metallische Schicht entsprechend der Maskierungsschicht passergenau zur ersten metallischen Schicht strukturiert ist. Vorzugsweise überdecken sich die erste und die zweite metallische Schicht zumindest bereichsweise. Durch die Erfindung gelingt es so, mittels einer Maskierungsschicht die erste photoaktivierbare Schicht in einem nachfolgenden Prozessschritt so zu belichten, dass die erste photoaktivierbare Schicht und damit die zweite metallische Schicht passergenau zur ersten metallischen Schicht strukturiert ist, obwohl die erste metallische Schicht zumindest bereichsweise in Überdeckung zu den transparenten Bereichen der Maskierungsschicht angeordnet ist und somit an sich die Strukturierung der ersten photoaktivierbaren Schicht behindert.

Gemäß einem bevorzugten Ausführungsbeispiel der Erfindung stellen die ersten und zweiten metallischen Schichten optisch wirksame Reflexionsschichten dar. Beim Folienelement handelt es sich vorzugsweise um ein Sicherheitselement zur Sicherung von Wertdokumenten, beispielsweise Banknoten, Kreditkarten oder ID-Dokumenten. In diesem Fall werden die ein oder mehreren weiteren Schichten vorzugsweise von Replizierlackschichten, Distanzschichten oder Dekorschichten gebildet. Weiter ist es auch möglich, dass die erste und zweite metallische Schicht als Elektrodenschichten eines elektrischen Bauelements ausgebildet sind und so die ein oder mehreren weiteren Schichten ein oder mehrere elektrische Funktionsschichten darstellen, insbesondere Schichten aus einem Halbleiter, einem Isolator oder einem elektrisch leitfähigen Material umfassen.

So sind gemäß einem bevorzugten Ausführungsbeispiel die erste metallische Schicht und die zweite metallische Schicht gemäß eines regelmäßigen, ein- oder zweidimensionalen Rasters strukturiert, d.h. die erste metallische Schicht und die zweite metallische Schicht weisen jeweils erste Bereiche, in denen das Metall vorgesehen ist und zweite Bereiche, in denen das Metall nicht vorgesehen ist, auf, die gemäß dem ersten bzw. dem zweiten Raster angeordnet sind. Bei dem ersten und zweiten Raster kann es sich beispielsweise um ein Linienraster oder auch um ein Flächenraster handeln, bei dem beispielsweise punkt- oder viereckförmige, metallische Bereiche in einer zweidimensionalen regelmäßigen Anordnung angeordnet sind. Hierbei kann es sich auch um geometrisch transformierte Raster handeln, beispielsweise mit kreisförmigen oder wellenförmigen Rasterlinien. Die Rasterweite der Raster beträgt vorzugsweise mehr als 300 µm, bevorzugt mehr als 600 µm. Durch die optische Überlagerung der ersten und zweiten metallischen Schicht ergibt sich für den menschlichen Betrachter ein optischer Gesamteindruck, der sich bereits bei geringsten Veränderungen der Ausrichtung der beiden Raster zueinander deutlich ändert. Nur wenn die beiden Raster passergenau zueinander ausgerichtet sind, ergibt sich der gewünschte optische Eindruck, beispielsweise ein aus konzentrischen Kreisen bestehendes Muster.

Hierbei hat es sich weiter als vorteilhaft erwiesen, für die beiden Raster übereinstimmende Rasterweiten zu wählen und das erste und das zweite Raster so zueinander auszurichten, dass erste Bereiche der metallischen Schicht im Bereich der zweiten Bereiche der zweiten metallischen Schicht und umgekehrt angeordnet sind. Dies wird beispielsweise dadurch erzielt, dass als erstes und zweites Raster identische Raster gewählt werden, die in einem Phasenversatz von etwa 180° zueinander angeordnet sind, d.h. um etwa ½ Rasterweite zueinander versetzt angeordnet sind.

Gemäß eines bevorzugten Ausführungsbeispiels der Erfindung weist die Trägerfolie eine Ablöseschicht auf, die das Ablösen eines die erste und die zweite metallische Schicht umfassenden Folienkörpers von dem Folienelement ermöglicht. Das Folienelement kann so beispielsweise als Transferfolie ausgebildet sein, wobei der die Maskierungsschicht und die Trägerfolie umfassende Folienkörper nach dem Applizieren des Folienelements auf ein Zielsubstrat von dem die erste und die zweite metallische Schicht umfassenden, die Übertragungslage bildenden Folienkörper abgezogen wird. Weiter ist es auch möglich, dass die Trägerfolie eine Ablöseschicht aufweist, die das Ablösen eines die Maskierungsschicht umfassenden Folienkörpers von dem Folienelement ermöglicht. So ist es möglich, nach Strukturierung der ersten photoaktivierbaren Schicht die Maskierungsschicht von dem Rest des Folienkörpers abzulösen. Hierdurch wird die Weiterverarbeitung des Folienelements verbessert.

Im Folgenden wird die Erfindung anhand von mehreren Ausführungsbeispielen unter Zuhilfenahme der beiliegenden Zeichnung beispielhaft erläutert.
- Fig. 1: zeigt eine schematische Schnittdarstellung eines Folienkörpers vor Durchführung der synchronisierten strukturgebenden Prozesse.
- Fig. 2: zeigt eine schematische Schnittdarstellung eines Folienkörpers, welcher durch zwei zueinander synchronisierte Belichtungsprozesse strukturiert wird.
- Fig. 3: zeigt eine schematische Schnittdarstellung einer Belichtungseinrichtung für ein Ausführungsbeispiel der Erfindung.
- Fig. 4: zeigt eine schematische Schnittdarstellung einer Belichtungseinrichtung für ein weiteres Ausführungsbeispiel der Erfindung.
- Fig. 5: zeigt eine schematische Schnittdarstellung eines Folienkörpers mit einer Maskierungsschicht und einer ersten metallischen Schicht, die zueinander passergenau strukturiert sind.
- Fig. 6: zeigt eine schematische Schnittdarstellung eines Folienkörpers, welcher mittels Durchbelichtung durch eine Maskierungsschicht belichtet wird.
- Fig. 7: zeigt eine schematische Schnittdarstellung des Folienkörpers nach Fig. 6 nach Durchführung eines Ätzprozesses.
- Fig. 8: zeigt eine schematische Schnittdarstellung eines Folienkörpers, welcher ein optisches Sicherheitselement bereitstellt.
- Fig. 9: zeigt eine schematische Schnittdarstellung eines Folienkörpers, welcher ein optisch variables Sicherheitselement bereitstellt.
- Fig. 10: zeigt mehrere Darstellungen, die die optische Wirkung der metallischen Schichten des Folienkörpers nach Fig. 8 verdeutlichen.
- Fig. 11: zeigt mehrere Darstellungen, die die optische Wirkung der metallischen Schichten des Folienkörpers nach Fig. 8 verdeutlichen.

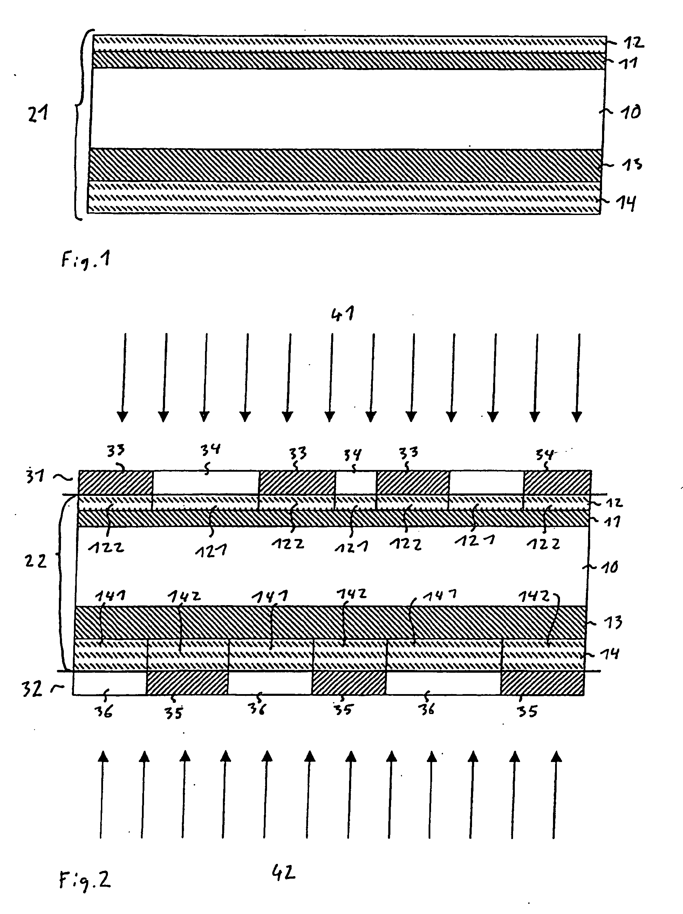

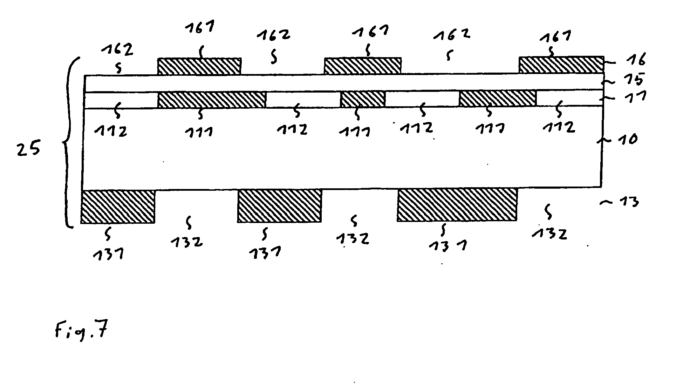

Anhand der Figuren Fig. 1 bis Fig. 6 wird nun im Folgenden das Verfahren zur Herstellung des in Fig. 7 gezeigten Folienelements beschrieben.

Zuerst wird hierzu der in Fig. 1 gezeigte Folienkörper 21 gefertigt. Der Folienkörper 21 weist eine Trägerfolie 10, eine auf einer ersten Seite der Trägerfolie aufgebrachte metallische Schicht 11, eine auf der gegenüber liegenden Seite der Trägerfolie 10 aufgebrachte metallische Schicht 13 und zwei photoaktivierbare Schichten 12 und 14 auf, die ihrerseits wiederum auf die metallische Schicht 11 bzw. die metallische Schicht 13 aufgebracht sind. Bei der Trägerfolie 10 handelt es sich um eine vorzugsweise transparente Kunststofffolie einer Dicke zwischen 8 µm und 125 µm. Vorzugsweise besteht die Trägerfolie 10 hierbei aus PET oder BOPP und ist im Weiteren auch monoaxial oder biaxial gereckt. Weiter ist es auch möglich, dass die Trägerfolie 10 nicht nur aus einer Schicht, sondern auch aus mehreren Schichten besteht. So ist es beispielsweise möglich, dass die Trägerfolie 10 neben einem Kunststoff-Träger, beispielsweise einer oben beschriebenen Kunststofffolie, eine Ablöseschicht aufweist, welche das Ablösen des aus den Schichten 11 und 12 bestehenden Schichtgebildes von der Trägerfolie 10 oder das Ablösen des von den Schichten 13 und 14 gebildeten Schichtgebildes von der Trägerfolie 10 ermöglicht.

Auf die Trägerfolie 10 werden in einem ersten Fertigungsschritt die metallischen Schichten 11 und 13 beispielsweise mittels Aufsputtern oder Aufdampfen vollflächig aufgebracht. Die metallischen Schichten 11 und 13 bestehen beispielsweise aus Aluminium, Silber, Kupfer, Gold oder aus einer Legierung dieser Materialien. Hierbei wird für die metallischen Schichten 11 und 13 vorzugsweise ein unterschiedliches metallisches Material verwendet und diese Schichten auch in unterschiedlichen Schichtdicken auf die Trägerfolie 10 aufgebracht, wie dies weiter unten detailliert erläutert wird. So besteht die metallische Schicht 13 vorzugsweise aus Kupfer und besitzt eine Schichtdicke von 100 bis 200 nm, weiter bevorzugt von etwa 200 nm. Die metallische Schicht 11 besteht vorzugsweise aus Silber mit einer Schichtdicke zwischen 20 und 40 nm, bevorzugt etwa 30 nm.

In einem zweiten Fertigungsschritt werden sodann die photoaktivierbaren Schichten 12 und 14 auf die metallische Schicht 11 bzw. auf die metallische Schicht 13 vollflächig aufgebracht, beispielsweise durch Aufdrucken, Aufsprühen oder Gießen. Als photoaktivierbares Material wird ein Negativ-Resist gewählt, welcher für die in dem folgenden Belichtungsprozess gewählte Belichtungs-Wellenlänge geeignet ist. So wird beispielsweise ein für UV-Licht ausgelegter Negativ-Resist verwendet, welcher in einer Schichtdicke von 100 bis 2000 nm, vorzugsweise in etwa 800 nm, auf die metallische Schicht 11 bzw. 14 aufgebracht wird.

Im Weiteren ist es auch möglich, anstelle eines Negativ-Resist auch einen Positiv-Resist zu verwenden, d.h. einen Photoresist zu verwenden, der bei Belichtung seine Schutzwirkung gegen die Säure oder Lauge des nachfolgenden Ätzprozesses verliert, so dass die belichteten Bereiche bei dem Ätzprozess entfernt werden. So ist es beispielsweise möglich, als photoaktivierbare Schicht einen Negativ-Resist mit einer Schichtdicke zwischen 100 bis 800 nm, vorzugsweise einer Schichtdicke von 200 bis 300 nm, aufzubringen, welcher für eine Belichtung im Wellenlängenbereich von 248 nm (beispielsweise Belichtung mit einem CO₂-Laser) ausgelegt ist.

In einem nachfolgenden Fertigungsschritt wird der Folienkörper 21 mittels zweier zueinander synchronisierter Belichtungsprozesse strukturiert, wie dies im Folgenden anhand der Figuren Fig. 2 bis Fig. 4 erläutert wird.

Fig. 2 zeigt einen zwischen zwei Masken 31 und 32 angeordneten Folienkörper 22, welcher dem Folienkörper 21 nach Belichtung entspricht. Der Folienkörper 22 weist so die photoaktivierbaren Schichten 12 und 14, die metallischen Schichten 11 und 13 sowie die Trägerfolie 10 auf. Die Maske 31 besteht aus einer Vielzahl von Bereichen 33, in denen die Maske 31 für das zur Belichtung verwendete Licht 41 undurchlässig oder weitgehend undurchlässig ist und einer Vielzahl von Bereichen 34, in denen die Maske 31 für das für die Belichtung verwendete Licht 41 transparent oder weitgehend transparent ist. Die Maske 32 besteht ebenso aus einer Vielzahl von Bereichen 36, in denen die Maske 32 für das für die Belichtung verwendete Licht 42 transparent oder weitgehend transparent ist und einer Vielzahl von Bereichen 35, in denen die Maske 32 für das für die Belichtung verwendete Licht undurchlässig oder weitgehend undurchlässig ist. Bei den Masken 31 und 32 handelt es sich hierbei vorzugsweise um zwei Glasplatten, beispielsweise besteht aus Quarzglas, welche mit einer entsprechend strukturierten Chrommaske versehen sind, d.h. in den Bereichen 33 bzw. 35 liegt die Chromschicht vor und in den Bereichen 34 bzw. 36 liegt sie nicht vor.

In einem ersten Belichtungsprozess wird der Folienkörper 22 nun von Seiten der metallischen Schicht 11 mit dem Licht 41 durch die Maske 31 belichtet, so dass in den unterhalb der Bereiche 34 der Maske 31 liegenden Bereichen 121 der photoaktivierbaren Schichten die photoaktivierbare Schicht 12 belichtet und damit aktiviert wird und in den unterhalb der Bereiche 33 der Maske 31 liegenden Bereiche 122 der photoaktivierbaren Schichten diese nicht belichtet und damit nicht aktiviert wird. Auf gleiche Weise wird in einem zweiten Belichtungsprozess der Folienkörper 22 von Seiten der metallischen Schicht 13 mit dem Licht 42 belichtet, so dass in den unterhalb der Bereiche 35 liegenden Bereich 142 der photoaktivierbaren Schicht 14 diese nicht belichtet und damit nicht aktiviert wird und in den unterhalb der Bereiche 36 der Maske 32 liegenden Bereich 141 der photoaktivierbaren Schicht 14 die photoaktivierbare Schicht 40 belichtet und damit aktiviert wird.

Die zwei Belichtungsmasken 31 und 32 sind passergenau zueinander angeordnet, so dass die beiden photoaktivierbaren Schichten 12 und 14 zueinander passergenau durch die beiden Belichtungsprozesse strukturiert werden.

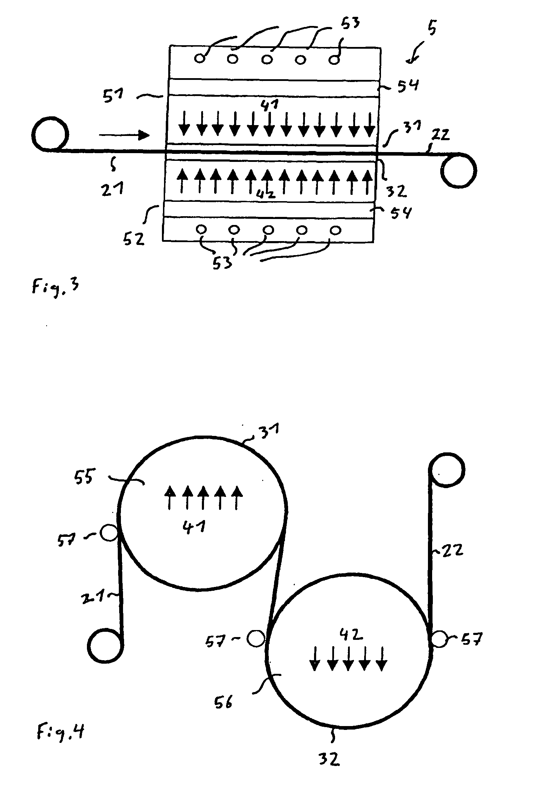

Aufgrund der abschirmenden Wirkung der Metallschichten 13 und 11 ist es hierbei möglich (bei entsprechender Wahl der Beleuchtungsstärke und der Belichtungsdauer), den ersten und zweiten Belichtungsschritt simultan und gleichzeitig durchzuführen. Besonders hat sich hierfür die in Fig. 3 gezeigte Belichtungseinrichtung bewährt.

Fig. 3 zeigt eine Belichtungseinrichtung 5, der einerseits von einer Folienrolle der Folienkörper 21 zugeführt wird, die den Folienkörper 21 belichtet und der dann der belichtete Folienkörper 21, d.h. der Folienkörper 22, entnommen wird und entweder auf einer weiteren Folienspule aufgespult oder direkt einem weiteren Fertigungsprozess, insbesondere einem Ätzprozess, zugeführt wird.

Die Belichtungseinrichtung 5 weist zwei Belichter 51 und 52 auf, die an einander gegenüberliegenden Seiten des Folienkörpers 21 angeordnet und sich gegenüber liegend positioniert sind. Der Belichter 51 weist die Belichtungsmaske 31, mehrere Lichtquellen 53 und einen Kollimator 54 auf, der dafür sorgt, dass das von den Lichtquellen 53 generierte Licht mit einem parallelen Strahlenverlauf auf die Belichtungsmaske 31 trifft. Der Belichter 52 weist die Belichtungsmaske 32 und ebenfalls einen Kollimator 54 und mehrere Lichtquellen 53 auf. Die Belichter 51 und 52 sind vorzugsweise durch einen Halterahmen miteinander verbunden und durch diesen zumindest bei Durchführung des Belichtungsvorgang im Register zueinander fixiert.

Die Belichtung des Folienkörpers 21 durch die Belichtungseinrichtung 5 erfolgt im Stop-and-Go-Betrieb. Der Folienkörper 21 wird der Belichtungseinrichtung 5 geführt. Die Belichter 51 und 52 werden gegen den Folienkörper 21 gepresst, so dass die Masken 31 und 32 auf dem Folienkörper 21 aufliegen und den Folienkörper fixieren. Anschließend erfolgt die beidseitige Belichtung, wobei die Leuchtstärke und Belichtungsdauer auf die photoaktivierbaren Schichten 12 und 14 abgestimmt sind. Um eine gegenseitige Beeinflussung der beiden zeitgleich stattfindenden Belichtungsprozesse weiter zu vermeiden, ist es auch möglich, für die photoaktivierbaren Schichten 12 und 14 Photoresists zu verwenden, welche auf unterschiedliche Wellenlängen ansprechen.

Nach der Belichtung wird der belichtete Teil des Folienkörpers 21, d.h. der Folienkörper 22, aus der Belichtungseinrichtung 5 gefahren und der Prozess beginnt wieder von vorne.

Im Weiteren ist es auch möglich, die Belichter 51 und 52 nicht gegenüberliegend zu positionieren, sondern nebeneinander zu positionieren, so dass die Belichtung der Vorder- und Rückseite eines Bereichs des Folienkörpers 21 zeitversetzt durchgeführt wird. Weiter ist es auch möglich, für die Belichtung Trommelbelichter einzusetzen.

Fig. 4 zeigt eine Belichtungseinrichtung mit einem ersten Trommelbelichter 55 und einem zweiten Trommelbelichter 56, bei der der Folienkörper 21 unter Zuhilfenahme von Führungswalzen 57 durch die Belichtungseinrichtung geführt wird. In diesem Fall sind die Belichtungsmasken 31 und 32 als Endlosmasken auf der Mantelfläche des Trommelbelichters 55 bzw. 56 angeordnet. Die Belichtung erfolgt hier mittels im Inneren der Trommelbelichter 55 und 56 angeordneter Lichtquellen, die das Licht 41 bzw. 42 generieren und den über die Mantelflächen der Trommelbelichter 55 bzw. 56 geführten Folienkörper belichten. Die Trommeln der Trommelbelichter 55 und 56 sind hierbei miteinander synchronisiert und so beispielsweise über ein Getriebe miteinander verbunden. Hierdurch wird sichergestellt, dass der erste und der zweite Belichtungsprozess zueinander synchronisiert sind und die photoaktivierbaren Schichten 12 und 14 passergenau zueinander strukturiert werden.

Nach der Belichtung und damit Strukturierung der photoaktivierbaren Schichten 12 und 14 werden in einem nachfolgenden Entwicklungs- und Ätzprozess die Bereiche der metallischen Schichten 11 und 13 entfernt, in denen die photoaktivierbare Schicht 12 bzw. 14 aktiviert, d.h. zersetzt (bei Verwendung eines Positiv-Resists) oder nicht aktiviert, d.h. nicht gehärtet (bei Verwendung eines Negativ-Resists) worden ist. So wird der Folienkörper 22 beispielsweise einem Ätzbad zugeführt, in dem die metallische Schicht 11 und die metallische Schicht 13, welche unterhalb der nicht belichteten Bereiche 122 der photoaktivierbaren Schicht 12 bzw. unterhalb der nicht belichteten Bereiche 142 der photoaktivierbaren Schicht 14 angeordnet sind, entfernt werden. Nach einem Wasch- und einem Trockenprozess werden sodann ein oder mehrere weitere Schichten auf die nun strukturierte metallische Schicht 11 aufgebracht und auf die Schicht(en) dann eine weitere metallische Schicht und eine weitere photoaktivierbare Schicht vollflächig aufgebracht.

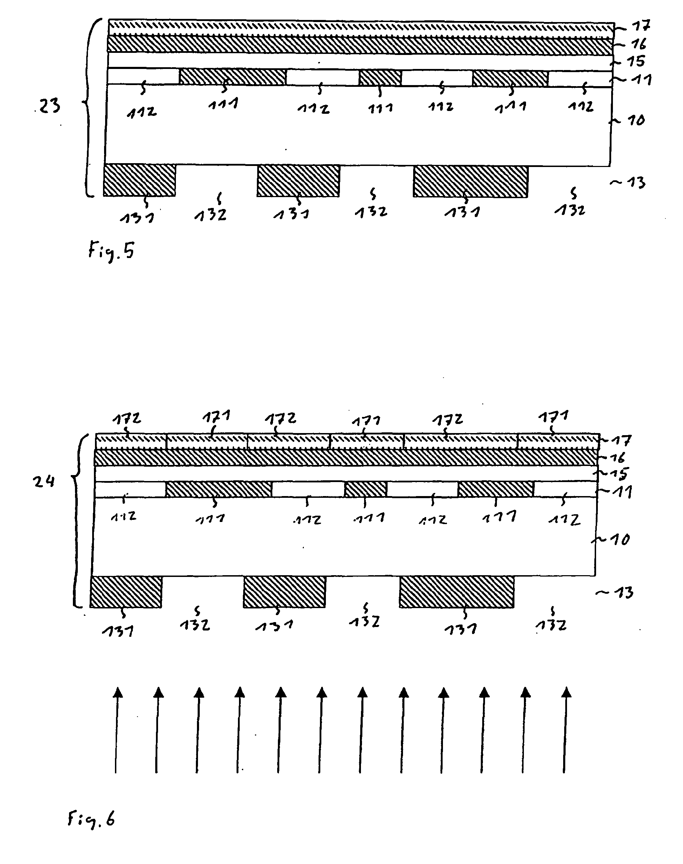

Fig. 5 zeigt den sich so ergebenden Folienkörper 23: Der Folienkörper 23 weist die Trägerfolie 10 auf, auf deren einen Seite die nun strukturierte metallische Schicht 13 und auf deren anderer Seite die nun strukturierte metallische Schicht 11 aufgebracht ist. Die metallische Schicht 13 besteht nun aus Bereichen 131, in denen Metall vorhanden ist, und Bereichen 132, in denen das Metall der metallischen Schicht 13 nicht vorhanden ist. Die metallische Schicht 11 besteht nun ebenfalls aus Bereichen, in denen das Metall der metallischen Schicht 11 vorhanden ist und Bereichen 112, in denen das Metall nicht vorhanden ist. Auf der metallischen Schicht 11 ist eine Schicht 15 aufgebracht, bei der es sich beispielsweise um eine transparente Lackschicht einer Dicke im Bereich von 50 nm bis 1000 nm handelt. Es ist jedoch auch möglich, dass anstelle der Schicht 15 oder zusätzlich zu der Schicht 15 noch weitere Schichten auf die metallische Schicht 11 aufgebracht sind. Bei solchen Schichten handelt es sich beispielsweise um Replizierlackschichten, in die diffraktive Strukturen eingeprägt sind, oder auch um eingefärbte Schichten. Weiter ist es auch möglich, dass es sich bei der Schicht 15 oder den weiteren Schichten um elektrische Funktionsschichten handelt. So ist es beispielsweise möglich, dass anstelle der Schicht 15 eine Halbleiterschicht einer Schichtdicke von 30 bis 100 nm, vorzugsweise von etwa 50 nm, und einer Schicht aus einem Isolator, beispielsweise einer Schichtdicke von 100 nm bis 1000 nm, vorzugsweise von 500 nm, vorgesehen ist.

Auf die Schicht 15 folgt eine weitere metallische Schicht 16, bei der es sich vorzugsweise um eine dünne Kupferschicht einer Schichtdicke von 10 bis 50 nm, vorzugsweise von 30 nm, handelt. Die metallische Schicht 16 kann aber auch aus einem anderen Metall, beispielsweise aus Silber oder Aluminium bestehen oder aus einer Abfolge von mehreren unterschiedlichen metallischen Schichten bestehen. Auf die metallische Schicht 16 folgt die photoaktivierbare Schicht 17, bei der es sich in dem Ausführungsbeispiel nach Fig. 5 um einen negativen Photoresist handelt, der in einer Schichtdicke zwischen 100 und 800 nm, vorzugsweise von etwa 200 nm, aufgebracht ist und für eine Belichtungs-Wellenlänge von etwa 365 nm ausgelegt ist.

In einem nächsten Schritt wird nun der Folienkörper 23 von Seiten der metallischen Schicht 13 her belichtet, wie dies in Fig. 6 verdeutlicht ist. Wie in Fig. 6 verdeutlicht ist, ist die Belichtungseinrichtung hierbei auf der Seite des Folienkörpers 23 angeordnet, auf der auch die Maskierungsschicht, die metallische Schicht 13 angeordnet ist. Die metallische Schicht 13 bildet demnach diejenige Schicht des Folienkörpers 23, die die der Belichtungseinrichtung nächstgelegene Schicht des Folienkörpers 23 darstellt. Die Belicht erfolgt so durch die metallische Schicht 13 und die unter dieser angeordneten Schichten des Folienkörpers.

Fig. 6 zeigt einen Folienkörper 24, der dem Folienkörper 23 nach Durchführung des Belichtungsschritts entspricht. Der Folienkörper 24 weist die metallischen Schichten 13, 11 und 16, die Trägerfolie 10, die Schicht 15 und die photoaktivierbare Schicht 17 auf. Wie in Fig. 6 verdeutlicht, wird die photoaktivierbare Schicht 17 in Bereichen 171, die deckungsgleich zu den Bereichen 132 der metallischen Schicht 13 angeordnet sind, aktiviert und in Bereichen 172, die Deckungsgleich zu den Bereichen 131 der metallischen Schicht 13 angeordnet sind, nicht aktiviert und so strukturiert. Damit dieses Ergebnis erzielt werden kann, sind jedoch spezielle Bedingungen einzuhalten: Das Verhältnis der Transmissionsgrade der metallischen Schicht 13 und der metallischen Schicht 11 (in den Bereichen, in denen die jeweilige Metallschicht vorgesehen ist) bei dem Wellenlängenbereich der für die Durchbelichtung verwendeten elektromagnetischen Strahlung ist hierbei größer gleich 1:10 zu wählen. Das Material und die Dicke der metallischen Schichten 11 und 13 wird nun so gewählt, dass diese Bedingung erfüllt wird. Im Weiteren hat sich auch die Einhaltung der folgenden Bedingung als vorteilhaft erwiesen: Das Verhältnis des Transmissionsgrads der metallischen Schicht 11 zu dem Transmissionsgrad der metallischen Schicht 13 bei der Wellenlänge der für die

Durchbelichtung verwendeten elektromagnetischen Strahlung ist vorzugsweise grösser gleich 1:15, weiter bevorzugt zwischen 1:15 und 1:20 zu wählen. Untersuchungen haben gezeigt, dass sich das Transmissionsverhalten bei etwa senkrechter Einstrahlung des aus den Schichten 13, 10, 11, 15 und 16 gebildeten Schichtkörpers abschnittweise annähernd durch Multiplikation der Transmissionsgrade der Einzelschichten bestimmen lässt. Untersuchungen haben weiter gezeigt, dass eine erfolgreiche Belichtung der photoaktivierbaren Schicht 17 es erforderlich macht, dass die in den Bereichen 171 und 172 einfallende Lichtmenge sich mindestens um den Faktor 15 unterscheidet. Bei einem Transmissionsgrad der metallischen Schichten 13 in den Bereichen 131 von T₁₃ und einem Transmissionsgrad der metallischen Schichten 11 in den Bereichen 111 von T₁₁ (bei Annahme dass der Transmissionsgrad in den Bereichen 132 und 112 100 % beträgt) ergibt sich so folgender nominierter Transmissionsgrad für die unterschiedlichen Abschnitte des Folienkörpers 24:
Bereiche, in denen die metallische Schicht 13 vorgesehen ist, die metallische Schicht 11 jedoch nicht vorgesehen ist: T₁₃.
Bereiche, in denen die metallische Schicht 13 und die metallische Schicht 11 vorgesehen ist: T₁₃ x T₁₁.
Bereiche, in denen weder die metallische Schicht 13 noch die metallische Schicht 11 vorgesehen ist: 100 %
Bereiche, in denen die metallische Schicht 13 nicht vorgesehen ist, jedoch die metallische Schicht 11 vorgesehen ist: T₁₁.

Um so auch für den Fall, in dem sich Bereiche 111 und 132 überdecken eine erfolgreiche Belichtung der photoaktivierbaren Schicht 17 zu gewährleisten, muss das Verhältnis T₁₁ zu T₁₃ größer gleich 15 sein. Im Weiteren wird dann die Beleuchtungsstärke und die Beleuchtungsdauer so gewählt, dass die photoaktivierbare Schicht 17 in den Bereichen, in denen sich die Bereiche 132 und 111 überdecken, noch aktiviert wird und in den Bereichen, in denen sich die Bereiche 131 und 112 überdecken, noch nicht aktiviert wird. Dies kann durch entsprechende Messreihen auf einfache Art und Weise ermittelt werden.

In einem weiteren Schritt wird der Folienkörper 25 sodann einem Entwicklungs- und Ätzprozess unterworfen, indem in den Bereichen 172, in denen die photoaktivierbare Schicht 17 nicht aktiviert worden ist, die metallische Schicht 16 entfernt wird und in den Bereichen 171, in denen die photoaktivierbare Schicht 17 aktiviert worden ist, diese durch den Photoresist geschützt bleibt und so auf der Schicht 15 verbleibt. Nach Waschen, Strippen und Trocknen liegt so das in Fig. 7 gezeigte Folienelement 25 vor, welches die strukturierten metallischen Schichten 13, 11 und 16, die Trägerfolie 10 und die Schicht 15 umfasst. Die metallische Schicht 16 weist deckungsgleich zu den Bereichen 131 Bereiche 162 auf, in denen das Metall der metallischen Schicht 16 nicht vorgesehen ist und deckungsgleich zu den Bereichen 132 Bereiche 161 auf, in denen das Metall der metallischen Schicht 16 vorgesehen ist. Damit ist die metallische Schicht 16 entsprechend der metallischen Schicht 13 und damit passergenau zu der metallischen Schicht 11 strukturiert. Die Bereiche 161 und 111 der metallischen Schichten 16 und 11 sind so passergenau zueinander ausgerichtet, trotz der Vielzahl von Prozessschritten, die zwischen der Strukturierung der metallischen Schicht 11 und der metallischen Schicht 16 durchlaufen wurden.

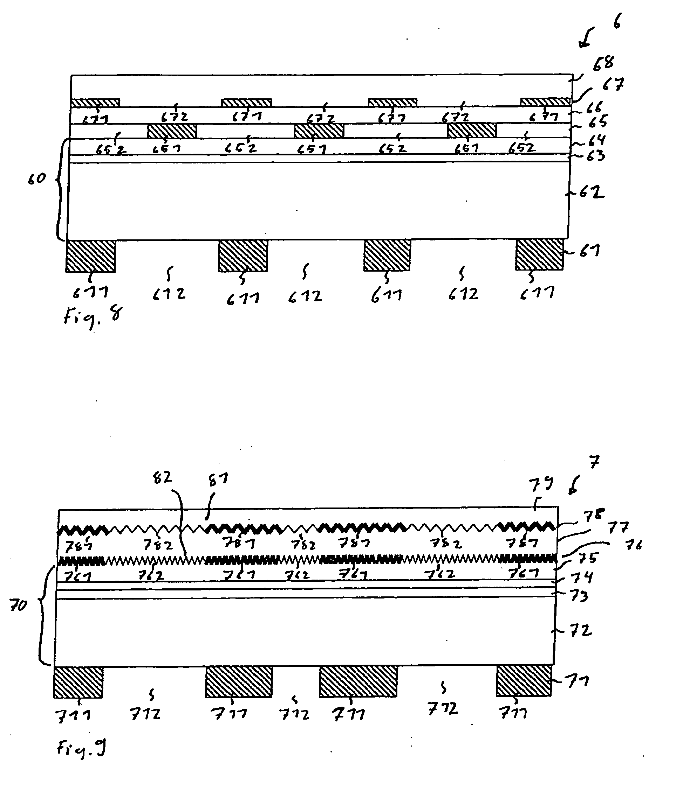

Fig. 8 zeigt einen Folienkörper 6, welcher als optisches Sicherheitselement Verwendung finden kann. Der Folienkörper 6 weist eine Trägerfolie 60 auf, welche aus einer Kunststofffolie 62, einer Ablöseschicht 63 und einer Replizierlackschicht 64 besteht. Bei der Kunststofffolie 62 handelt es sich vorzugsweise um einen aus PET oder BOPP bestehenden Kunststoffträger einer Schichtdicke zwischen 8 µm und 125 µm. Bei der Replizierschicht 64 handelt es sich um einen Replizierlack, in den mittels eines beheizten Prägestempels oder mittels UV-Replikation ein Oberflächenrelief abformbar ist. Bei der Replizierschicht 64 handelt es sich so beispielsweise um einen thermoplastischen Lack. Bei der Ablöseschicht 63 handelt es sich um eine Schicht beispielsweise enthaltend Wachskomponenten, die ein Ablösen der Schicht 62 von dem auf die Schicht 64 folgenden Schichtkörper ermöglicht. Der Folienkörper 6 weist weiter metallische Schichten 61 und 67, eine weitere Replizierschicht 66 und eine Schutzlackschicht 68 auf.

Der Folienkörper 6 wird, wie bereits vorhergehend anhand der Figuren Fig. 1 bis Fig. 6 erläutert, mittels Durchbelichtung durch die als Maskierungsschicht dienende metallische Schicht 61 hergestellt. Anstelle der Trägerfolie 10 wird hierbei die Trägerfolie 60 verwendet und hierbei in einem dem in Fig. 2 beschriebenen Belichtungsprozess vorangehenden Fertigungsschritt gefertigt:

Auf die Kunststofffolie 62 wird hierbei die Ablöseschicht 63 und dann die Replizierschicht 64 vollflächig aufgebracht. Anschließend wird in die Replizierschicht 64 ein optisch wirksames Oberflächenrelief, beispielsweise ein Beugungsgitter oder ein Hologramm, beispielsweise mittels Hitze und Druck unter Verwendung einer Replizierwalze oder mittels UV-Replikation eingebracht. Anschließend werden gemäß den Ausführungen nach den Figuren Fig. 2 bis Fig. 4 die metallischen Schichten 61 und 65 aufgebracht und passergenau zueinander strukturiert. Sodann wird die Replizierschicht 66 aufgebracht und in diese Schicht ebenfalls ein optisch wirksames Oberflächenrelief, beispielsweise ein Beugungsgitter oder ein Hologramm, abgeformt. Anschließend wird gemäß den Ausführungen nach Fig. 5 und Fig. 6 die metallische Schicht 67 auf die Replizierlackschicht 66 aufgebracht und mittels Durchbelichtung durch die metallische Schicht 61 strukturiert. Anschließend wird die Schutzlackschicht 68 aufgebracht.

Der Brechungsindex der Schutzlackschicht 68 und der beiden Replizierschichten 64 und 66 ist hierbei so gewählt, dass der Brechungsindex dieser Schichten identisch ist oder nur geringfügig voneinander abweicht, so dass in den Bereichen, in denen nicht eine metallische Schicht auf den Oberflächenstrukturen aufgebracht ist, die optische Wirkung der Oberflächenstruktur ausgelöscht wird. Weiter ist es auch möglich, auf die Verwendung der Replizierlackschichten 54 und 66 und auf die Abformung von optisch wirksamen Oberflächenreliefen in diese Schichten zu verzichten (anstelle der Replizierschicht 66 wird dann beispielsweise eine transparente Lackschicht vorgesehen).

Die metallische Schicht 65 und die metallische Schicht 61 werden hierbei in einem Prozessschritt nach Fig. 6 derart strukturiert, dass sich in Bezug auf die metallischen Schichten 67 und 65 die in Fig. 8 angedeutete, regelmäßige Anordnung zueinander ergibt: Im ersten Bereich 651 ist die metallische Schicht 65 vorgesehen und im zweiten Bereich 652 ist die metallische Schicht 65 nicht vorgesehen. Die Bereiche 652 und 651 sind gemäß eines regelmäßigen geometrisch transformierten Linienraster angeordnet, so dass die Bereiche 651 äquidistan voneinander beabstandet sind.

In derselben Weise besteht die Metallschicht 67 aus Bereichen 671, in denen die metallische Schicht vorgesehen ist, und Bereichen 672, in denen die metallische Schicht nicht vorgesehen ist, wobei auch die Bereiche 671 und 672 gemäß eines regelmäßigen Linienrasters ausgerichtet sind. Wie in Fig. 8 angedeutet, stimmen hierbei die Rasterabstände der beiden Linienraster überein und die Breite der metallischen Bereiche 671 und 651 sowie die Ausrichtung der Raster zueinander sind so gewählt, dass die Bereiche 671 im Bereich der Bereiche 652 und die Bereiche 651 im Bereich der Bereiche 672 angeordnet sind. Im Weiteren ist die Breite der Bereiche 651 und 671 sowie die Ausrichtung der beiden Raster zueinander vorzugsweise so gewählt, dass - wie in Fig. 8 gezeigt - sich jeweils zwischen den Bereichen 671 und 651 ein kleiner Spalt befindet und damit der von den Schichten 63 bis 68 gebildete Körper in diesem Bereich transparent ist. Vorzugsweise werden so für die Schichten 65 und 67 identische Raster verwendet, die um etwa 180°, also um etwa ½ Rasterabstand, zueinander versetzt sind und die Breite der metallischen Bereiche 651 und 671 so gewählt ist, dass diese kleiner als die ½ Rasterweite sind, bevorzugt etwa ¼ der Rasterweite ist.

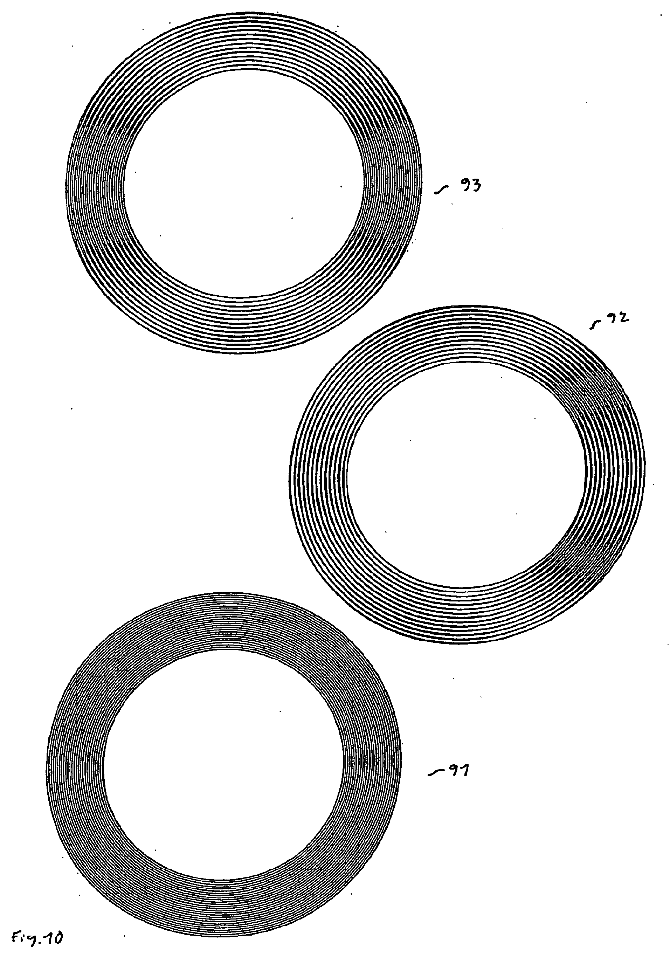

Werden als Raster für die metallischen Schichten 65 und 67 kreisförmig transformierte Linienraster verwendet, so ergibt sich bei einer passergenauen Ausrichtung der Strukturierung der Schichten zueinander ein optisches Erscheinungsbild 91, wie es in Fig. 10 gezeigt ist:
Das optische Erscheinungsbild 91 wird von einer Abfolge konzentrischer Kreise gebildet, wobei abwechselnd ein Kreis von einem Bereich 671 der Metallschicht 67 und einem Bereich 651 der metallischen Schicht 65 gebildet wird. Sind die beiden metallischen Schichten 65 und 67 passergenau zueinander in der oben beschriebenen Weise strukturiert, so ergibt sich für den Betrachter eine regelmäßige Abfolge konzentrischer Kreise. Bereits bei geringer Registerungenauigkeit bei der Strukturierung der Schichten 65 und 67 ändert sich das optische Erscheinungsbild für den Betrachter deutlich: So ist in Fig. 10 ein optisches Erscheinungsbild 92 und ein optisches Erscheinungsbild 93 gezeigt, bei dem zum einen eine geringe horizontale Verschiebung und zum anderen eine geringe Verzerrung der Ausrichtung der Strukturierung der Schichten 65 und 67 zueinander vorliegt. Durch den hierbei auftretenden Moire-Effekt und die speziellen Eigenschaften der Wahrnehmung optischer Darstellungen durch den menschlichen Betrachter sind diese sehr geringen Änderungen (bereits bei wenigen Prozent Abweichung) für den menschlichen Betrachter deutlich erkennbar.

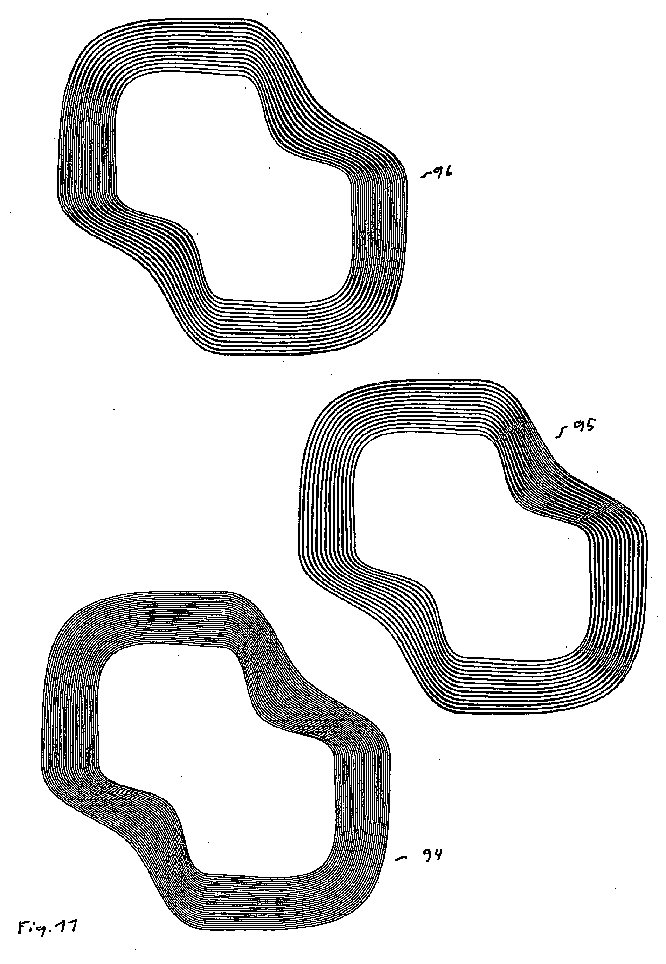

Fig. 11 zeigt optische Erscheinungsbilder 94, 95 und 96 einer weiteren Strukturierung der metallischen Schichten 67 und 65, wobei hier im Gegensatz zu der Ausführungsform nach Fig. 10 kein kreisförmig geometrisch transformiertes Linienraster sondern ein gemäß einer geometrischen Figur transformiertes Linienraster der Strukturierung der metallischen Schichten 65 und 67 zugrundegelegt worden ist. Das optische Erscheinungsbild 94 zeigt das Erscheinungsbild bei passergenauer Ausrichtung der Schichten und die optischen Erscheinungsbilder 95 und 96 zeigen die Erscheinungsbilder bei geringfügiger vertikaler Verschiebung bzw. geringfügiger Verzerrung der Strukturierung der metallischen Schichten 65 und 67 zueinander.

Der Folienkörper 6 nach Fig. 8 kann im Weiteren noch mit ein oder mehreren weiteren Schichten, beispielsweise mit einer Kleberschicht, versehen werden. Weiter ermöglicht die Ablöseschicht 63 das Ablösen der Kunststofffolie 62 mit der metallischen Schicht 61 von dem übrigen Folienkörper, so dass der Folienkörper mit den Schichten 64 bis 68 als Sicherheitselement beispielsweise durch Heißprägen auf ein zu sicherndes Dokument transferiert werden kann. Die Erfindung ist so auch auf einen solchen, als Sicherheitselement dienenden Folienkörper gerichtet, welcher zwei metallischen Schichten, nämlich die Schichten 65 und 67, aufweist, zwischen denen mindestens eine transparente weitere Schicht, nämlich die Schicht 66, vorgesehen ist, wobei die beiden metallischen Schichten gemäß den weiteren Merkmalen der Ansprüche 32 bis 34 ausgebildet sind.

Fig. 9 zeigt einen Folienkörper 7, welcher ebenfalls als ein Sicherheitselement, beispielsweise zur Sicherung von Banknoten, Wertdokumenten oder ID-Dokumenten, verwendet werden kann. Der Folienkörper 7 weist eine Trägerfolie 70 mit einer Replizierschicht 75, einer Schutzlackschicht 74, einer Ablöseschicht 73 und einer Kunststofffolie 72, metallische Schichten 71, 76 und 78, einer Replizierschicht 77 und einer Kleberschicht 79 auf. Der Folienkörper 7 wird wie in Bezug auf den Folienkörper 6 nach Fig. 8 beschrieben hergestellt, wobei hier in die Oberfläche der Replizierschicht 75 eine erste beugungsoptische Reliefstruktur 82 und in die Oberfläche der Replizierschicht 77 eine zweite beugungsoptische Reliefstruktur 81 abgeformt ist, wie dies auch in Fig. 9 dargestellt ist. Auch hier wird die metallische Schicht 78 mittels Durchbelichtung durch die als Maskierungsschicht dienende metallische Schicht 71 strukturiert, so dass in Bereichen 781 die metallischen Schicht vorgesehen ist und in Bereichen 782 die metallische Schicht nicht vorgesehen ist, deckungsgleich zu den metallischen Bereichen 711 der metallischen Schicht 71.

Wie in Fig. 9 gezeigt, unterscheidet sich die Strukturierung der metallischen Schichten 76 und 78 jedoch von der Strukturierung der metallischen Schichten 65 und 67 nach Fig. 8: Die metallischen Schichten 76 und 78 sind im wesentlichen deckungsgleich zueinander vorgesehen, so dass die Bereiche 761 und 781, in denen das Metall der jeweiligen metallischen Schicht vorgesehen ist und die Bereiche 762 und 782, in denen das Metall der jeweiligen metallischen Schicht nicht vorgesehen ist, im wesentlichen deckungsgleich übereinanderliegen. Für die beugungsoptischen Reliefstrukturen 81 und 82 werden nun unterschiedliche beugungsoptische Strukturen, beispielsweise unterschiedliche Hologramme, gewählt. So zeigt sich nach Entfernen des von der Kunststofffolie 72 und der metallischen Schicht 71 gebildeten Körpers von dem restlichen Teil des Folienkörpers mittels der Ablöseschicht 73 bei der Betrachtung von der Vorderseite und von der Rückseite ein unterschiedlicher optischer Eindruck: Bei Betrachtung von Seiten der Schicht 79 zeigt sich der durch die beugungsoptische Reliefstruktur 81 generierte optische Effekt, beispielsweise ein erstes Hologramm, überlagert durch das von dem transparenten Bereich (Bereiche 782 und 762) gebildete Merkmal. Bei Betrachtung von Seiten der Schicht 74 zeigt sich der von der beugungsoptischen Reliefstruktur 82 generierte optische Eindruck, beispielsweise ein zweites Hologramm sowie ebenfalls das von den transparenten Bereichen 782 und 762 bereitgestellte Merkmal.

## Patentansprüche

1. Verfahren zur Herstellung eines Folienelements (25) mit zueinander
registrierten metallischen Schichten (11, 16).
wobei
eine auf einer ersten Oberfläche einer flexiblen, ein- oder
mehrschichtigen Trägerfolie (10) vorgesehene erste metallische Schicht (11) und eine auf der der ersten Oberfläche gegenüber liegenden zweiten Oberfläche der Trägerfolie (10) vorgesehene Maskierungsschicht (13) mittels zueinander synchronisierter strukturgebender, vorzugsweise optischer Prozesse zueinander passergenau strukturiert werden, wobei nach der Strukturierung der ersten metallischen Schicht (11) und der Maskierungsschicht (13) ein oder mehrere weitere Schichten auf die erste metallische Schicht (11) aufgebracht werden, wobei auf die ein oder mehreren weiteren Schichten eine zweite metallische Schicht (16) aufgebracht wird, auf die zweite metallische Schicht eine erste photoaktivierbare Schicht (17) aufgebracht wird, und wobei die erste photoaktivierbare Schicht (17) mittels Durchbelichtung durch die Maskierungsschicht (13), die erste metallische Schicht, die ein oder mehreren weiteren Schichten (15) und die zweite metallische Schicht (16) von Seiten der Maskierungsschicht (13) mittels elektromagnetischer Strahlung einer Wellenlänge strukturiert wird, für die die erste photoaktivierbare Schicht (17) empfindlich ist, wobei die Dicke und das Material der Maskierungsschicht (13) und der ersten metallischen Schicht (11) so gewählt sind, dass das Verhältnis der Transmissionsgrade der Maskierungsschicht (13) und der ersten metallischen Schicht (11) bei der Wellenlänge der für die Durchbelichtung verwendeten elektromagnetischen Strahlung größer als 1:10 ist.

2. Verfahren nach Anspruch 1,
**dadurch gekennzeichnet,**
**dass** das Verhältnis des Transmissionsgrades der Maskierungsschicht (13) zu dem Transmissionsgrad der ersten metallischen Schicht (11) bei der Wellenlänge der für die Durchbelichtung verwendeten elektromagnetischen Strahlung größer gleich 1:15 ist, bevorzugt zwischen 1:15 und 1:20 beträgt und/oder dass der Transmissionsgrad der Maskierungsschicht (13) bei der Wellenlänge der für die Durchbelichtung verwendeten elektromagnetischen Strahlung kleiner als 6 % ist.

3. Verfahren zur Herstellung eines Folienelements mit zueinander registrierten metallischen Schichten,
wobei
eine auf einer ersten Oberfläche einer flexiblen ein- oder mehrschichtigen Trägerfolie vorgesehene erste metallische Schicht und eine auf der der ersten Oberfläche gegenüber liegenden zweiten Oberfläche der Trägerfolie vorgesehene Maskierungsschicht mittels zueinander synchronisierter strukturgebender Prozesse zueinander passergenau strukturiert werden, wobei nach der Strukturierung der ersten metallischen Schicht und der Maskierungsschicht ein oder mehrere weiterer Schichten auf die erste metallische Schicht aufgebracht werden, wobei auf die ein oder mehreren weiteren Schichten eine zweite metallische Schicht aufgebracht wird, wobei auf die zweite metallische Schicht eine erste photoaktivierbare Schicht aufgebracht wird, und wobei die erste photoaktivierbare Schicht gesteuert durch die Maskierungsschicht mit elektromagnetischer Strahlung, für die die photoaktivierbare Schicht empfindlich ist, von der der Maskierungsschicht gegenüberliegenden Seite des Folienkörpers her belichtet wird, der die Maskierungsschicht, die erste metallische Schicht, die ein oder mehreren weiteren Schichten, die zweite metallische Schicht und die erste photoaktivierbare Schicht umfaßt, und so strukturiert wird.

4. Verfahren nach Anspruch 3,
**dadurch gekennzeichnet,**
**dass** die Maskierungsschicht mittels ein oder mehrere optischer Sensoren optisch abgetastet wird und die Belichtung der ersten photoaktivierbaren Schicht entsprechend der von den optischen Sensoren erfassten Werte gesteuert wird, oder dass die Maskierungsschicht mittels einer Lichtquelle belichtet wird und das von der Maskierungsschicht reflektierte Licht zur Belichtung der ersten photoaktivierbaren Schicht umgelenkt wird, wodurch die erste photoaktivierbare Schicht gesteuert durch die Maskierungsschicht belichtet wird, oder dass die Maskierungsschicht zur Strukturierung der ersten photoaktivierbaren Schicht von der Trägerfolie getrennt wird, zwischen einer Lichtquelle und der ersten photoaktivierbaren Schicht positioniert wird, und die erste photoaktivierbare Schicht mittels Durchbelichtung durch die Maskierungsschicht belichtet wird, wodurch die erste photoaktivierbare Schicht gesteuert durch die Maskierungsschicht belichtet wird.

5. Verfahren nach einem der vorhergehenden Ansprüche,
**dadurch gekennzeichnet,**
**dass** die zweite metallische Schicht (16) in den Bereichen, in denen die erste photoaktivierbare Schicht (17) bei der Belichtung aktiviert worden ist oder in den Bereichen, in denen die erste photoaktivierbare Schicht bei der Belichtung nicht aktiviert worden ist, mittels eines Ätzprozesses partiell entfernt wird, so dass die zweite metallische Schicht (16) entsprechend der Maskierungsschicht (13) passergenau zur ersten metallischen Schicht (11) strukturiert ist.

6. Verfahren nach einem der vorhergehenden Ansprüche,
**dadurch gekennzeichnet,**
**dass** als synchronisierte strukturgebende Prozesse zwei zueinander synchronisierte Belichtungsprozesse verwendet werden.

7. Verfahren nach Anspruch 6,
**dadurch gekennzeichnet,**
**dass** die Maskierungsschicht (13) und die erste metallische Schicht (11) auf den ein- oder mehrschichtigen Folienkörper (10) aufgebracht werden, dass anschließend eine zweite photoaktivierbare Schicht (12) auf die erste metallische Schicht (11) und eine dritte photoaktivierbare Schicht (14) auf die Maskierungsschicht (13) aufgebracht werden, dass die zweite photoaktivierbare Schicht (12) in einem ersten Belichtungsprozess durch eine erste Belichtungsmaske (31) und die dritte photoaktivierbare Schicht (14) in einem zweiten Belichtungsprozess durch eine zweite Belichtungsmaske (32) belichtet werden, wobei die erste und die zweite Belichtungsmaske (31, 32) passergenau zueinander ausgerichtet sind und so der erste und der zweite Belichtungsprozess zueinander synchronisiert sind, und dass die erste metallische Schicht (11) und die Maskierungsschicht (13) mittels eines Ätzprozesses in den Bereichen (112', 132) entfernt werden, in denen die zweite photoaktivierbare Schicht (12) bzw. die dritte photoaktivierbare Schicht (14) durch den ersten bzw. zweiten Belichtungsprozess aktiviert oder nicht aktiviert worden sind.

8. Verfahren nach Anspruch 7,
**dadurch gekennzeichnet,**
**dass** die erste und die zweite Belichtungsmaske (31, 32) an einander gegenüberliegenden Seiten des die zweite und die dritte photoaktivierbare Schicht (12, 14), die metallische Schicht (11), die Maskenschicht (13) und die Trägerfolie (10) umfassenden Folienkörpers angeordnet sind und die zweite und die dritte photoaktivierbare Schicht gleichzeitig belichtet werden.

9. Verfahren nach einem der Ansprüche 1 bis 5,
**dadurch gekennzeichnet,**
**dass** als synchronisierte strukturgebende Prozesse ein Belichtungsprozess und ein Laser-Ablationsprozess verwendet werden, die zueinander
synchronisiert sind.

10. Verfahren nach Anspruch 9,
**dadurch gekennzeichnet,**
**dass** die Maskierungsschicht (13) in einem Laser-Ablationsprozess mittels eines Lasers strukturiert wird und die erste metallische Schicht in einem Belichtungsprozess mittels Belichtung durch eine Belichtungsmaske strukturiert wird, wobei der Laser mit der Position der Belichtungsmaske synchronisiert ist.

11. Folienelement (25), insbesondere herstellbar nach Anspruch 1 oder Anspruch 3,
mit einer flexiblen, ein- oder mehrschichtigen Trägerfolie (10) und einer ersten metallischen Schicht (11), die auf einer ersten Oberfläche der Trägerfolie vorgesehen ist,
**dadurch gekennzeichnet,**
**dass** das Folienelement (25) weiter eine auf einer der ersten Oberfläche gegenüber liegenden zweiten Oberfläche der Trägerfolie vorgesehene Maskierungsschicht (13), eine auf Seiten der ersten Oberfläche angeordnete zweite metallische Schicht (16) und ein oder mehrere weitere Schichten (15) aufweist, die zwischen der ersten und der zweiten metallischen Schicht angeordnet sind, wobei die Maskierungsschicht (13) und die erste metallische Schicht (11) passergenau zueinander strukturiert sind und die zweite metallische Schicht (16) entsprechend der Maskierungsschicht (13) passergenau zur ersten metallischen (11) Schicht strukturiert ist, wobei sich vorzugsweise die erste und die zweite metallische Schicht zumindest bereichsweise überdecken.

12. Folienelement nach Anspruch 11,
**dadurch gekennzeichnet,**
**dass** die Dicke und das Material der Maskierungsschicht (13) und der ersten metallischen Schicht (11) so gewählt sind, dass das Verhältnis der Transmissionsgrade der ersten metallischen Schicht (11) und der Maskierungsschicht (13) bei einer Wellenlänge einer für die Durchbelichtung verwendbaren elektromagnetischen Strahlung größer als 1:10 ist.

13. Folienelement nach einem der Ansprüche 11 bis 12,
**dadurch gekennzeichnet,**
**dass** die Trägerfolie eine Ablöseschicht aufweist, die das Ablösen eines die erste und die zweite metallische Schicht umfassenden Folienkörpers von dem Folienelement ermöglicht.

14. Folienelement nach einem der Ansprüche 11 bis 13,
**dadurch gekennzeichnet,**
**dass** die Trägerfolie eine Ablöseschicht aufweist, die das Ablösen eines die Maskierungsschicht umfassenden Folienkörpers von dem Folienelement ermöglicht.

15. Folienelement nach einem der Ansprüche 11 bis 14,
**dadurch gekennzeichnet,**
**dass** die erste metallische Schicht (65) und die zweite metallische Schicht (67) jeweils aus ersten Bereichen (651, 671), in denen das Metall der metallischen Schicht vorgesehen ist, und zweiten Bereichen (672, 652), in denen das Metall der metallischen Schicht nicht vorgesehen ist, besteht, dass die ersten und zweiten Bereiche der ersten metallischen Schicht (65) gemäß eines ersten regelmäßigen ein- oder zweidimensionalen Rasters angeordnet sind und die ersten und zweiten Bereiche der zweiten metallischen Schicht (67) gemäß eines zweiten regelmäßigen ein- oder zweidimensionalen Rasters angeordnet sind, wobei das erste und das zweite Raster passergenau zueinander ausgerichtet sind.

## Claims

1. Method for producing a film element (25) with metallic layers (11, 16) which are in register with one another, wherein a first metallic layer (11), which is provided on a first surface of a flexible single-layer or multi-layer carrier film (10), and a masking layer (13), which is provided on the second surface of the carrier film (10) located opposite the first surface, are structured in register with one another using structuring processes which are synchronized with respect to one another, preferably optical processes, wherein one or more further layers are applied onto the first metallic layer (11) after the first metallic layer (11) and the masking layer (13) have been structured, wherein a second metallic layer (16) is applied onto the one or more further layers, and a first photoactivatable layer (17) is applied onto the second metallic layer, and wherein the first photoactivatable layer (17) is structured by means of irradiating electromagnetic radiation of a wavelength to which the first photoactivatable layer (17) is sensitive through the masking layer (13), the first metallic layer, the one or more further layers (15) and the second metallic layer (16) from the side of the masking layer (13), wherein the thicknesses and the materials of the masking layer (13) and of the first metallic layer (11) are chosen such that, at the wavelength of the electromagnetic radiation used for the irradiation, the ratio of the transmittances of the masking layer (13) and of the first metallic layer (11) is greater than 1:10.

2. Method according to Claim 1, **characterized in that**, at the wavelength of the electromagnetic radiation used for the irradiation, the ratio of the transmittance of the masking layer (13) to the transmittance of the first metallic layer (11) is greater than or equal to 1:15, preferably is between 1:15 and 1:20, and/or **in that**, at the wavelength of the electromagnetic radiation used for the irradiation, the transmittance of the masking layer (13) is less than 6%.

3. Method for producing a film element with metallic layers which are in register with one another, wherein a first metallic layer, which is located on a first surface of a flexible single-layer or multi-layer carrier film, and a masking layer, which is provided on the second surface of the carrier film located opposite the first surface, are structured in register with one another using structuring processes which are synchronized with respect to one another, wherein one or more further layers are applied onto the first metallic layer after the first metallic layer and the masking layer have been structured, wherein a second metallic layer is applied onto the one or more further layers, wherein a first photoactivatable layer is applied onto the second metallic layer, and wherein the first photoactivatable layer is irradiated in a controlled fashion by means of electromagnetic radiation to which the photoactivatable layer is sensitive through the masking layer, from the side of the film body that is opposite the masking layer and comprises the masking layer, the first metallic layer, the one or more further layers, the second metallic layer and the first photoactivatable layer, and is structured in this manner.

4. Method according to Claim 3, **characterized in that** the masking layer is optically scanned using one or more optical sensors and the irradiation of the first photoactivatable layer is controlled in accordance with the values ascertained by the optical sensors, or **in that** the masking layer is irradiated using a light source and the light reflected by the masking layer is deflected for the irradiation of the first photoactivatable layer, as a result of which the first photoactivatable layer is irradiated in a controlled fashion through the masking layer, or **in that**, for structuring the first photoactivatable layer, the masking layer is separated from the carrier film, is positioned between a light source and the first photoactivatable layer, and the first photoactivatable layer is irradiated through the masking layer, as a result of which the first photoactivatable layer is irradiated in a controlled fashion through the masking layer.

5. Method according to one of the preceding claims, **characterized in that**, in the regions in which the first photoactivatable layer (17) has been activated during the irradiation or in the regions in which the first photoactivatable layer was not activated during the irradiation, the second metallic layer (16) is partially removed by means of an etching process such that the second metallic layer (16) is structured in accordance with the masking layer (13) in register with the first metallic layer (11).

6. Method according to one of the preceding claims, **characterized in that** two irradiation processes are used as the synchronized structuring processes.

7. Method according to Claim 6, **characterized in that** the masking layer (13) and the first metallic layer (11) are applied onto the single-layer or multi-layer film body (10), **in that** a second photoactivatable layer (12) is subsequently applied onto the first metallic layer (11) and a third photoactivatable layer (14) onto the masking layer (13), **in that**, in a first irradiation process, the second photoactivatable layer (12) is irradiated through a first exposure mask (31) and, in a second irradiation process, the third photoactivatable layer (14) is irradiated through a second exposure mask (32), wherein the first and second exposure masks (31, 32) are aligned such that they are in register with one another and thus the first and second irradiation processes are synchronized with respect to one another, and **in that** the first metallic layer (11) and the masking layer (13) are removed by means of an etching process in the regions (112', 132) in which the second photoactivatable layer (12) and the third photoactivatable layer (14), respectively, have been activated by the first and second irradiation process, respectively, or not activated.

8. Method according to Claim 7, **characterized in that** the first and the second exposure masks (31, 32) are arranged on opposite sides of the film body, which comprises the second and the third photoactivatable layer (12, 14), the metallic layer (11), the mask layer (13) and the carrier film (10), and the second and the third photoactivatable layer are irradiated at the same time.

9. Method according to one of Claims 1 to 5, **characterized in that** an irradiation process and a laser ablation process, which are synchronized with respect to one another, are used as the synchronized structuring processes.

10. Method according to Claim 9, **characterized in that** the masking layer (13) is structured in a laser ablution process using a laser and the first metallic layer is structured in an irradiation process using irradiation through an exposure mask, wherein the laser is synchronized with the position of the irradiation mask.

11. Film element (25), in particular producible according to Claim 1 or 3, with a flexible, single-layer or multi-layer carrier film (10) and a first metallic layer (11), which is provided on a first surface of the carrier film, **characterized in that** the film element (25) has furthermore a masking layer (13), which is provided on the second surface of the carrier film located opposite the first surface, a second metallic layer (16), which is arranged on the side of the first surface, and one or more further layers (15), which are arranged between the first and the second metallic layer wherein the masking layer (13) and the first metallic layer (11) are structured in register with one another and the second metallic layer (16) is structured in accordance with the masking layer (13) in register with the first metallic layer (11), wherein the first and the second metallic layer preferably overlap one another at least regionally.

12. Film element according to Claim 11, **characterized in that** the thicknesses and the materials of the masking layer (13) and of the first metallic layer (11) are chosen such that, at the wavelength of the electromagnetic radiation used for the irradiation, the ratio of the transmittances of the first metallic layer (11) and of the masking layer (13) is greater than 1:10.

13. Film element according to one of Claims 11 to 12, **characterized in that** the carrier film has a release layer which allows a film body, which comprises the first and the second metallic layer, to be removed from the film element.

14. Film element according to one of Claims 11 to 13, **characterized in that** the carrier film has a release layer which allows a film body, which comprises the masking layer, to be removed from the film element.

15. Film element according to one of Claims 11 to 14, **characterized in that** the first metallic layer (65) and the second metallic layer (67) consist in each case of first regions (651, 671), in which the metal of the metallic layer is provided, and second regions (673, 652), in which the metal of the metallic layer is not provided, **in that** the first and second regions of the first metallic layer (65) are arranged according to a first regular one-dimensional or two-dimensional grid and the first and second regions of the second metallic layer (67) are arranged according to a second regular one-dimensional or two-dimensional grid, with the first and the second grid being aligned in register with one another.

## Revendications

1. Procédé de fabrication d'un élément en feuille (25) comportant des couches métalliques (11, 16) disposées les unes par apport aux autres, une première couche métallique (11) prévue sur une première surface d'une feuille substrat (10) flexible à une ou plusieurs couches et une couche de masquage (13) prévue sur la deuxième surface de la feuille substrat (10) opposée à la première surface étant structurées de façon à s'adapter exactement les unes aux autres au moyen de processus texturant synchronisés les uns par rapport aux autres, dans lequel, après la structuration de la première couche métallique (11) et de la couche de masquage (13), une ou plusieurs autres couches sont appliquées sur la première couche métallique (11), une deuxième couche métallique (16) étant appliquée sur l'une ou les plusieurs autres couches, une première couche photo-activable (17) étant appliquée sur la deuxième couche métallique et la première couche photo-activable (17) étant structurée par exposition au travers de la couche de masquage (13), la première couche métallique, l'une ou les plusieurs autres couches (15) et la deuxième couche métallique (16) des côtés de la couche de masquage (13) étant structurées par rayonnement électromagnétique d'une longueur d'ondes à laquelle la première couche photo-activable (17) est sensible, l'épaisseur et le matériau de la couche de masquage (13) et de la première couche métallique (11) étant choisis de telle sorte que le rapport du degré de transmission de la couche de masquage (13) et de la première couche métallique (11) à la longueur d'ondes du rayonnement électromagnétique utilisée pour l'exposition étant supérieur à 1:10.

2. Procédé selon la revendication 1, **caractérisé en ce que** le rapport du degré de transmission de la couche de masquage (13) au degré de transmission de la première couche métallique (11) à la longueur d'ondes du rayonnement électromagnétique utilisé pour l'exposition est supérieur ou égal à 1:15, de préférence entre 1:15 et 1:20 et/ou **en ce que** le degré de transmission de la couche de masquage (13) à la longueur d'ondes du rayonnement électromagnétique utilisé pour l'exposition est inférieur à 6 %.

3. Procédé de production d'un élément en feuille comportant des couches métalliques disposées les unes par apport aux autres, une première couche métallique prévue sur une première surface d'une feuille substrat flexible à une ou plusieurs couches et une couche de masquage prévue sur la deuxième surface de la feuille substrat opposée à la première surface étant structurées de façon à s'adapter exactement les unes aux autres au moyen de processus texturants synchronisés les uns par rapport aux autres, dans lequel, après la structuration de la première couche métallique et de la couche de masquage, une ou plusieurs autres couches sont appliquées sur la première couche métallique, une deuxième couche métallique étant appliquée sur l'une ou les plusieurs autres couches, une première couche photo-activable étant appliquée sur la deuxième couche métallique et la première couche photo-activable commandée par la couche de masquage avec un rayonnement électromagnétique auquel la couche photoactivable est sensible, étant exposée du côté du corps de feuille opposé à la couche de masquage, qui comprend la couche de masquage, la première couche métallique, l'une ou les plusieurs autres couches, la deuxième couche métallique et la première couche photo-activale, et étant ainsi structurée.

4. Procédé selon la revendication 3, **caractérisé en ce que** la couche de masquage est détectée optiquement par un ou plusieurs capteurs optiques et l'exposition de la première couche photo-activable est commandée de façon correspondant aux valeurs acquises par les détecteurs optiques ou **en ce que** la couche de masquage est exposée au moyen d'une source de lumière et la lumière réfléchie par la couche de masquage est détournée pour l'exposition de la première couche photo-activable, la première couche photo-activable commandée par la couche de masquage étant ainsi exposée ou **en ce que** la couche de masquage est séparée de la feuille substrat pour la structuration de la première couche photo-activable, est placée entre une source de lumière et la première couche photo-activable et la première couche photo-activable est exposée par exposition au travers de la couche de masquage, la première couche photo-activable commandée par la couche de masquage étant ainsi exposée.

5. Procédé selon l'une des revendications précédentes, **caractérisé en ce que** la deuxième couche métallique (16) est retirée partiellement dans les zones dans lesquelles la première couche photo-activable (17) est activée par exposition ou dans les zones dans lesquelles la première couche photo-activable n'est pas activée par exposition, par un processus de corrosion de sorte que la deuxième couche métallique (16) soit structurée conformément à la couche de masquage (13) de façon à s'adapter exactement à la première couche métallique (11).

6. Procédé selon l'une des revendications précédentes, **caractérisé en ce que** l'on utilise comme processus texturants synchronisés, deux processus d'exposition synchronisés l'un par rapport à l'autre.

7. Procédé selon la revendication 6, **caractérisé en ce que** la couche de masquage (13) et la première couche métallique (11) sont appliquées sur l'un ou plusieurs corps de feuille (10), **en ce qu'**ensuite, une deuxième couche photo-activable (12) est appliquée sur la première couche métallique (11) et une troisième couche photo-activable (14) est appliquée sur la couche de masquage (13), **en ce que** la deuxième couche photo-activable (12) est exposée dans un premier processus d'exposition au travers d'un premier masque d'exposition (31) et la troisième couche photo-activable (14) est exposée dans un deuxième processus d'exposition au travers d'un deuxième masque d'exposition (32), le premier et le deuxième masque d'exposition (31, 32) étant orientés de façon à s'adapter exactement l'un par rapport à l'autre et ainsi, le premier et le deuxième processus d'exposition sont synchronisés l'un par rapport à l'autre, et **en ce que** la première couche métallique (11) et la couche de masquage (13) sont retirées au moyen d'un processus de corrosion dans les zones (112', 132) dans lesquelles la deuxième couche photo-activable (12) ou la troisième couche photo-activable (14) sont activées par le premier ou le deuxième processus ou le processus d'exposition ou ne sont pas activées.

8. Procédé selon la revendication 7, **caractérisé en ce que** les première et deuxième masques d'exposition (31, 32) sont disposés sur les côtés opposés l'un à l'autre du corps de feuille comprenant la deuxième et la troisième couche photo-activable (12, 14), la couche métallique (11), la couche de masque (13) et la feuille substrat (10) et la deuxième et la troisième couche photo-activable étant exposées de façon concomitante.

9. Procédé selon l'une des revendications 1 à 5, **caractérisé en ce que** l'on utilise comme processus texturants synchronisés, un processus d'exposition et un processus d'ablation laser qui sont synchronisés l'un par rapport à l'autre.

10. Procédé selon la revendication 9, **caractérisé en ce que** la couche de masquage (13) est structurée dans un processus d'ablation au laser au moyen d'un laser et la première couche métallique est structurée dans un processus d'exposition par exposition au travers d'un masque d'exposition, le laser étant synchronisé avec la position du masque d'exposition.

11. Elément en feuille (25), pouvant être produit en particulier selon la revendication 1 ou la revendication 3, comportant une feuille substrat (10) flexible à une ou plusieurs couches et une première couche métallique (11) qui est prévue sur une première surface de la feuille substrat, **caractérisé en ce que** l'élément en feuille (25) présente en outre une couche de masquage (13) prévue sur une deuxième surface opposée à la première surface, une deuxième couche métallique (16) disposée du côté de la première surface et une ou plusieurs autres couches (15) qui sont disposées entre la première et la deuxième couche métallique, la couche de masquage (13) et la première couche métallique (11) étant structurées de façon à s'adapter exactement et la deuxième couche métallique (16) étant structurée conformément à la couche de masquage (13) de façon à s'adapter exactement à la première couche métallique (11), de préférence, la première et la deuxième couche métallique se chevauchant au moins en partie.

12. Elément en feuille selon la revendication 11, **caractérisé en ce que** l'épaisseur et le matériau de la couche de masquage (13) et de la première couche métallique (11) sont choisis de telle sorte que le rapport du degré de transmission de la première couche métallique (11) et de la couche de masquage (13) à une longueur d'ondes d'un rayonnement électromagnétique utilisable pour l'exposition est supérieur à 1:10.

13. Elément en feuille selon l'une des revendications 11 à 12, **caractérisé en ce que** la feuille substrat présente une couche de décollement qui permet le décollement d'un corps de feuille comprenant la première et la deuxième feuille métallique de l'élément en feuille.

14. Elément en feuille selon l'une des revendications 11 à 13, **caractérisé en ce que** la feuille substrat présente une couche de décollement qui permet le décollement d'un corps de feuille comprenant la couche de masquage de l'élément en feuille.

15. Elément en feuille selon l'une des revendications 11 à 14, **caractérisé en ce que** la première couche métallique (65) et la deuxième couche métallique (67) sont constituées respectivement de premières zones (651, 671) dans lesquelles le métal de la couche métallique est prévu et de deuxièmes zones (672, 652) dans lesquelles le métal de la couche métallique n'est pas prévu, **en ce que** les première et deuxième zones de la première couche métallique (65) sont disposées selon une première trame régulière unidimensionnelle ou bidimensionnelle et les première et deuxième zones de la deuxième couche métallique (67) sont disposées selon une deuxième trame régulière unidimensionnelle ou bidimensionnelle, la première et la deuxième trame étant disposées de façon à s'adapter exactement l'une à l'autre.
